(19) Europäisches Patentamt
European Patent Office
Office européen des brevets

(11) **EP 4 314 475 B1**

(12) **FASCICULE DE BREVET EUROPEEN**

(45) Date de publication et mention de la délivrance du brevet:
**26.06.2024 Bulletin 2024/26**

(21) Numéro de dépôt: **22715127.1**

(22) Date de dépôt: **21.03.2022**

(51) Classification Internationale des Brevets (IPC):
**E21B 17/042** (2006.01)   **F16L 15/06** (2006.01)
**F16L 15/08** (2006.01)   **F16L 58/08** (2006.01)
**F16L 15/00** (2006.01)

(52) Classification Coopérative des Brevets (CPC):
**E21B 17/042; F16L 15/009; F16L 15/06;**
**F16L 15/08; F16L 58/08**

(86) Numéro de dépôt international:
**PCT/FR2022/050508**

(87) Numéro de publication internationale:
**WO 2022/207995 (06.10.2022 Gazette 2022/40)**

(54) **DIMENSIONNEMENT D'UN JEU AXIAL DE FILETAGE**

GRÖSSENBESTIMMUNG EINES AXIALEN GEWINDESPIELS

SIZING A THREAD AXIAL CLEARANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2021 FR 2103327**

(43) Date de publication de la demande:
**07.02.2024 Bulletin 2024/06**

(73) Titulaires:
• **Vallourec Oil and Gas France**
**59620 Aulnoye-Aymeries (FR)**
• **NIPPON STEEL CORPORATION**
**Chiyoda-ku**
**Tokyo 100-8071 (JP)**

(72) Inventeurs:
• **MATHON, Thibault**
**92190 Meudon (FR)**
• **BOUFFLERS, Laurent**
**92190 Meudon (FR)**
• **LUONGO, Matthieu**
**92190 Meudon (FR)**

(74) Mandataire: **Mbacke, Mactar**
**Vallourec Tubes**
**12, rue de la Verrerie**
**92190 Meudon (FR)**

(56) Documents cités:
WO-A1-2007/114460   FR-A1- 2 952 993
FR-A1- 2 953 272   FR-A1- 3 098 878
FR-A1- 3 098 879   US-A- 5 419 595

**Description**

**Domaine technique**

L'invention concerne les composants ou conduits en acier dans le domaine du pétrole et gaz, de l'énergie ou le stockage, pour une utilisation tel que l'exploitation de puits ou le transport d'hydrocarbures, le transport ou le stockage d'hydrogène, la géothermie ou la capture de carbone.

**Arrière-plan technologique**

On entend ici par "composant" tout élément, accessoire ou conduit, utilisé pour forer ou exploiter un puits et comprenant au moins une connexion ou connecteur ou encore une extrémité filetée, et destiné à être assemblé par un filetage à un autre composant pour constituer avec cet autre composant un joint fileté. Le composant peut être par exemple un tube ou un élément tubulaire de relativement grande longueur (notamment d'environ une dizaine de mètres de longueur), par exemple un tube, ou bien un manchon tubulaire de quelques dizaines de centimètres de longueur, ou encore un accessoire de ces éléments tubulaires (dispositif de suspension ou « hanger », pièce de changement de section ou « cross-over », vanne de sécurité, connecteur pour tige de forage ou « tool joint », « sub », et analogues).

Les composants ou conduits sont dotés d'extrémités filetées. Ces extrémités filetées sont complémentaires permettant le raccordement de deux éléments tubulaires mâle (« Pin ») et femelle (« Box ») entre eux. Il y a donc une extrémité filetée mâle et une extrémité filetée femelle. Les extrémités filetées dites premium ou semi-premium comportent généralement au moins une surface de butée. Une première butée peut être formée par deux surfaces de deux extrémités filetées, orientées de façon sensiblement radiale, configurées de façon à être en contact l'une avec l'autre à l'issue du vissage des extrémités filetées entre elles ou lors de sollicitations de compression. Les butées ont généralement des angles négatifs par rapport à l'axe principal des connexions. On connaît également des butées intermédiaires sur des joints comportant au moins deux étages de filetage. L'extrémité filetée, la surface de butée ainsi qu'une surface d'étanchéité peuvent former un ensemble que l'on appelle une lèvre. Il peut exister une lèvre avec un filetage orienté vers l'extérieuir du tube, c'est à dire une lèvre mâle, et une lèvre avec un filetage orienté vers l'intérieur du tube, c'est-à-dire une lèvre femelle.

L'usinage d'un tube pour produire son filetage implique l'existence d'un pas de filetage. La notion de pas de filetage doit être comprise à la lumière de l'ISO 5408:2009 qui porte sur la définition des filetages. Le pas de filetage doit être maitrisé afin d'éviter des problèmes d'assemblage et d'utilisation d'un joint, entre le filetage mâle et le filetage femelle correspondant.

Il est possible qu'un écart non prévu entre d'une part un pas de la partie mâle ou un pas de la partie femelle et d'autre part avec le pas théorique se produise du fait de l'imprécision de la méthode ou des outils de filetage employés lors de l'usinage. Cet écart est appelé une erreur de pas. Il existe des appareils qui permettent de mesurer un pas de filetage et qui permettent de mesurer une erreur de pas ou de détecter une erreur de pas non tolérable et de procéder au rejet du composant fileté concerné. Un exemple d'appareil de mesure est décrit dans la norme API SPECIFICATION 5B « GAUGING AND INSPECTION OF CASING, TUBING, AND LINE PIPE THREADS ».

Cependant, il est possible que la mesure soit imprécise du fait de l'appareil de mesure lui-même qui peut admettre des imperfections. En général, il existe des standards de sécurité et des marges d'erreurs à prendre en compte également pour ce type d'appareils.

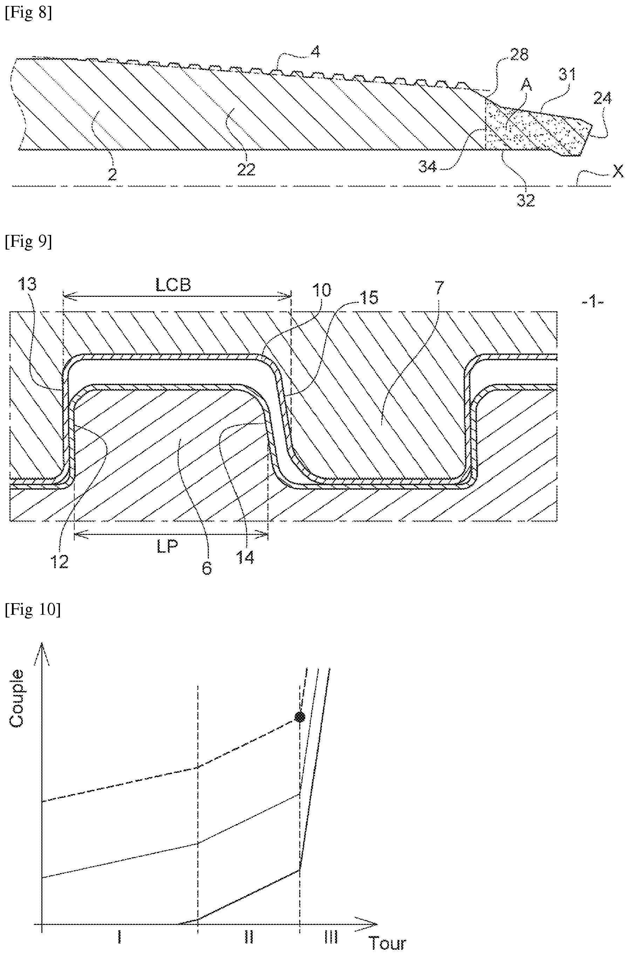

Les problèmes peuvent survenir après vissage des deux éléments tubulaires mâle et femelle. En effet il est difficile de mesurer les pas à l'état joint, et donc de détecter éventuellement des erreurs de pas. On peut détecter une erreur de pas en analysant les courbes de vissage (voir figure 10), mais à ce stade il est déjà trop tard et les deux tubes concernés doivent être rejetés. Les critères de rejets figurent dans les spécifications fournisseurs par exemple le « VAM book ». Ainsi il arrive de générer lors de l'usinage, malgré les mesures de précautions et de sécurité, plusieurs petites erreurs de pas qui peuvent être individuellement tolérable et compris dans une marge d'erreur acceptable. Le tube peut être ainsi validé, alors qu'il comprend un cumul de petites erreurs de pas acceptables et poursuivre son cycle industriel. La demanderesse a pu identifier et établir de manière surprenante que le cumul des erreurs de pas qui peuvent être individuellement acceptables, peut contribuer à un décalage des flancs de filet sur l'ensemble du filetage. Ce cumul et/ou ce décalage lorsqu'il dépasse un certain seuil et quand il est opposé sur un élément tubulaire mâle et femelle crée un démariage de pas, ce dernier a pour conséquence d'engendrer une interférence axiale ou un problème d'accostage entre flancs de filets. Cette interférence axiale ou problème d'accostage peut provoquer sur un ou plusieurs endroits du filetage une contrainte beaucoup trop élevée du fait de la compression de deux dents de filetage mâle et femelle. Cette contrainte excessive est capable d'engendrer un accostage entre filets à un nombre de tours de vissage trop élevé, au détriment du vissage pour lequel on ne peut plus assurer le positionnement correct de la partie mâle vis-à-vis de la partie femelle. Ceci peut impliquer à la fois un risque de fragilisation ou de plastification de la connexion, ainsi qu'un risque de perte d'étanchéité pouvant entrainer des fuites de la connexion. Une fuite peut provoquer des conséquences économiques, voire environnementales considérables, par exemple lorsqu'une fuite se produit dans un puits d'hydrocarbure lors de son exploitation.

Les conséquences dues au démariage de pas, et par conséquent des problèmes de fuites sont d'autant plus accentuées lorsque l'on applique un revêtement solide avec des propriétés de type anticorrosion ou lubrifiant.

FR2952993 A1 divulgue un joint fileté comportant des filets respectivement mâles et femelles présentant un jeu axial subsistant à l'état connecté entre les flancs d'engagement des filets mâle et femelle, et la surface distale de l'extrémité mâle et/ou de l'extrémité femelle étant mise en contact de butée axiale contre une surface de butée correspondante. Le document divulgue un jeu axial de l'ordre de 0,002 mm à 1 mm, où le choix du jeu axial à l'état connecté peut être guidé par le volume de graisse souhaité, l'angle des flancs et les tolérances d'usinage.

L'invention permet de résoudre l'ensemble des problèmes précédemment cités. En particulier, l'invention propose une configuration capable de s'affranchir des conséquences d'erreurs de pas et en particulier de leur cumul dans le filetage, tout en assurant une absence de problème d'interférence axiale ou d'accostage ainsi qu'une étanchéité.

Selon un mode de réalisation, l'invention fournit un joint fileté tubulaire pour le forage, l'exploitation des puits hydrocarbures, le transport de pétrole et de gaz, la captation carbone ou la géothermie, comprenant un élément tubulaire mâle et un élément tubulaire femelle chacun desdits éléments tubulaires mâle ou femelle comprenant respectivement une portion filetée mâle et une portion filetée femelle, l'une ou l'autre des portions filetées mâle ou femelle comprenant optionnellement un revêtement solide anticorrosif et/ou lubrifiant, ladite portion filetée mâle et portion filetée femelle comprends respectivement au moins une dent de filetage mâle ou une dent de filetage femelle et un jeu axial de filetage TAG assurant un espace, à l'état monté, entre un flanc d'engagement de ladite dent de filetage mâle et un flanc porteur de ladite dent de filetage femelle, caractérisé en ce que ledit jeu axial de filetage TAG est supérieur ou égale à un jeu minimal TAGmin tel que :

[Math 1]

$$TAGmin = IT(min) * (1/2\frac{(LFpinmin)}{(Dpinmin)} + 1/2\frac{(LFboxmin)}{(Dboxmin)}) + (4 * Epcoat)$$

Avec : $0 \leq Epcoat \leq Epcoat\ max$

Où :

| | |
|---|---|
| TAGmin | Valeur minimale du jeu axial de filetage en mm |
| ITmin | Valeur minimale de la tolérance du démariage de pas en mm |
| LFpinmin | Valeur minimale de la longueur axiale de filetage mâle en mm |
| LFboxmin | Valeur minimale de la longueur axiale de filetage femelle en mm |
| Dpinmin | Valeur minimale de la distance de la tolérance de pas mâle en mm |
| Dboxmin | Valeur minimale de la distance de la tolérance de pas femelle en mm |
| Epcoat | Valeur de l'épaisseur d'un revêtement anticorrosif et/ou lubrifiant en mm |

Grâce à cette caractéristique, un joint selon l'invention a un jeu axial de filetage (TAG) qui respecte un seuil minimal à partir duquel il est assuré de compenser l'effet de tout décalage du filetage issu d'une accumulation d'erreur de pas. Cette accumulation pouvant également provenir de plusieurs erreurs de pas individuellement acceptables.

De manière surprenante, lorsque l'équation est satisfaite, les risques de démariage de pas, qui peuvent exister d'une connexion à une autre, sont absorbés dans un jeu axial de filetage suffisamment grand. On s'affranchit donc totalement de tout risque d'interférence axial et donc de fragilisation et de plastification dû à un décalage provoqué par un démariage de pas trop important.

On entend par jeu axial de filetage ou « Threaded Axial Gap » (TAG) la distance séparant un flanc d'engagement d'une dent de filetage mâle et un flanc d'engagement d'une dent de filetage femelle faisant face au flanc d'engagement de la dent de filetage mâle, pouvant être exprimée en mm. Ce jeu axial de filetage se mesure au niveau de la moitié de la hauteur de la dent mâle.

On entend par erreur de pas le décalage qui résulte de la comparaison entre un pas réel, c'est-à-dire le pas mesuré sur une pièce produite et un pas au plan, c'est-à-dire le pas initialement défini sur le plan du produit.

On entend par erreur de pas individuellement acceptable, toute erreur de pas par filet suffisamment petite et tolérable pour être validée lors du contrôle du filetage après usinage, les valeurs de référence étant définies sur plan et/ou par norme.

On entend par démariage de pas la différence entre le cumul d'erreur de pas sur le filetage mâle et le cumul d'erreur de pas sur le filetage femelle.

En parallèle, cette équation permet également de s'assurer d'avoir un niveau de vissage contrôlé.

Selon un mode de réalisation, la valeur de la tolérance du démariage de pas est comprise entre 0,040 et 0,080 mm, de préférence entre 0,048 et 0,072 mm.

Grâce à cette caractéristique, l'erreur de pas est mesurable par un appareil de contrôle classique par exemple décrit dans l'API 5B1. En effet, en dessous de la tolérance on sera obligé d'avoir recours à des appareils plus coûteux dont le résultat de mesure n'est pas forcément assuré. Il n'est pas souhaitable d'avoir une valeur de la tolérance supérieure à 0,080 mm.

Selon un mode de réalisation le joint fileté tubulaire est caractérisé en ce que le jeu axial de filetage TAG est inférieure ou égale à un jeu maximal TAGmax telle que :

[Math 2]

$$TAGmax = a * PinLipSurface + b + (4 * Epcoat)$$

Avec :

$$0 \leq Epcoat \leq Epcoat\ max$$

a = 0.00053
b = 0.14
Où :

PinLipSurface Valeur de la surface de la coupe transversale de la lèvre mâle entre la portée d'étanchéité et la surface de butée en mm$^2$
a Valeur de la pente de la corrélation
b Valeur de l'ordonnée à l'origine
Epcoat Valeur de l'épaisseur d'un revêtement anticorrosif et/ou lubrifiant en mm

Grâce à cette caractéristique, on élimine le risque de perte de performance d'étanchéité due à un jeu axial de filetage TAG qui serait trop élevé.

On entend par performance d'étanchéité la tenue de la connexion face à des sollicitations combinées à la fois pression extérieur-/intérieur et traction/compression. L'étanchéité peut être au liquide ou au gaz.

Grâce à cette caractéristique, un joint selon l'invention est plus robuste sous sollicitations qui nécessitent de la compression.

En effet, un jeu axial de filetage trop grand peut entraîner une sur-sollicitation au niveau de la lèvre et donc une plastification quand la connexion est sollicitée en compression. Cette sur sollicitation peut conduire à une fuite.

Ainsi, l'étanchéité d'une connexion est donc non seulement assurée lorsque l'équation est satisfaite mais la demanderesse a constaté une amélioration des performances en étanchéité avec plusieurs types de connexions selon l'invention.

Selon un mode de réalisation, le jeu axial de filetage TAG est compris entre deux valeurs TAGmin et TAGmax tel que : TAGmin < TAGmax

Selon un mode de réalisation, le joint fileté tubulaire (1) est caractérisé en ce que au moins une des portions filetées mâle (4) ou portions filetées femelle (5) comprends un revêtement anticorrosif et/ou lubrifiant et en ce que la valeur de l'épaisseur du revêtement anticorrosif et/ou lubrifiant (10) Epcoat est supérieure à zéro.

Grâce à cette caractéristique, l'ajout d'un revêtement solide anticorrosif et/ou lubrifiant sur le filetage augmente les risques d'interférence axiale indésirable. En effet, l'épaisseur d'un revêtement solide peut contribuer à augmenter la pression de contact sur les flancs d'un filet augmentant le risque de fragilisation ou de plastification. L'invention permet alors un vissage sans risque de fragilisation ou de plastification supplémentaire d'une connexion due à un revêtement dans un filetage.

Selon un mode de réalisation le joint fileté tubulaire est caractérisé en ce que la valeur maximale de l'épaisseur d'un revêtement anticorrosif et/ou lubrifiant Epcoat max est égale à 0,0075 mm.

Grâce à cette caractéristique, la configuration peut intégrer une grande variété de revêtements solides anticorrosifs et/ou lubrifiants, qui permet d'éliminer un risque lié au démariage de pas jusqu'à une valeur maximale de 0,0075 mm.

Selon un mode de réalisation, le revêtement anticorrosif et/ou lubrifiant comprends une couche comprenant du Zinc et du Nickel.

**Brève** description des **figures**

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

[Fig.1] La figure 1 décrit de façon schématique, selon une vue de coupe longitudinale, un joint fileté tubulaire selon l'invention, avec contact des flancs porteurs.

Fig.2] La figure 2 décrit de façon schématique, selon une vue de coupe longitudinale, un joint fileté tubulaire selon l'invention, avec contact des flancs d'engagement.

[Fig.3] La figure 3 décrit de façon schématique, selon une vue de coupe longitudinale, une dent de filetage mâle et femelle d'un joint fileté tubulaire selon l'invention.

[Fig.4] La figure 4 décrit de façon schématique, selon une vue en coupe longitudinale, d'une extrémité mâle selon l'invention.

[Fig.5] La figure 5 décrit de façon schématique, selon une vue en coupe longitudinale, d'une extrémité femelle selon l'invention.

[Fig.6] La figure 6 décrit de façon schématique, selon une vue en coupe longitudinale, une analyse par éléments finis d'un joint fileté tubulaire selon l'état de la technique.

[Fig.7] La figure 7 décrit de façon schématique, selon une vue en coupe longitudinale, une analyse par éléments finis d'un joint fileté tubulaire selon l'invention.

[Fig.8] La figure 8 décrit de façon schématique, selon une vue en coupe longitudinale, une lèvre d'un élément fileté tubulaire mâle.

[Fig.9] La figure 9 décrit de façon schématique, selon une vue en coupe longitudinale, l'agencement d'un filet mâle et un filet femelle selon l'invention après vissage.

[Fig.10] La figure 10 décrit une courbe de vissage d'un tube selon l'état de l'art comprenant un cumul d'erreur de pas non absorbé.

[Fig.11] La figure 11 décrit une courbe de vissage selon l'invention comprenant un cumul d'erreur de pas absorbé.

[Fig.12] La figure 12 décrit de façon schématique, selon une coupe longitudinale un joint fileté tubulaire comprenant un cumul d'erreur de pas.

**Description des modes de réalisation**

Dans la suite de la description, les termes « longitudinal », « transversal », « vertical », « avant », « arrière », « gauche » et « droit » sont définis selon un repère orthogonal usuel tel que représenté sur les dessins, qui comprend :

un axe longitudinal X, horizontal et de gauche à droite des vues de coupe;
Par ailleurs, dans la description et les revendications, les termes « extérieur » ou « intérieur » et les orientations « axial » et « radial » seront utilisés pour désigner, selon les définitions données dans la description, des éléments du joint fileté tubulaire. L'axe longitudinal X détermine l'orientation "axiale". L'orientation "radiale" est dirigée orthogonalement à l'axe longitudinal X.

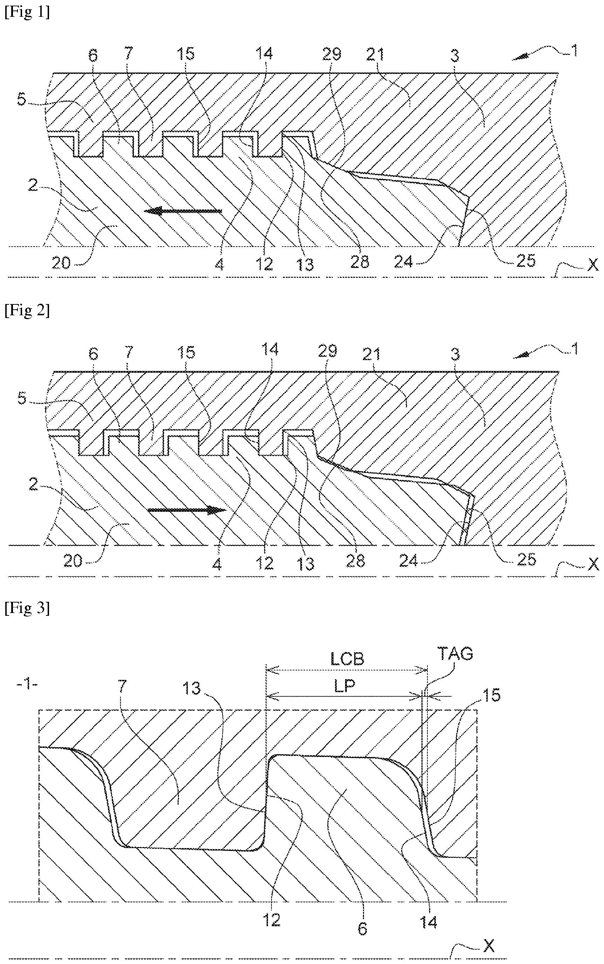

La figure 1 décrit un joint fileté tubulaire (1) selon l'invention comprenant un élément tubulaire mâle (2) comprenant une portion filetée mâle (4), une portée d'étanchéité mâle (28) ainsi qu'une butée mâle (24), et un élément tubulaire femelle (3) comprenant une portion filetée femelle (5), une portée d'étanchéité femelle (29) ainsi qu'une butée femelle (25). Lesdites portions filetées mâles (4) et femelles (5) comprenant respectivement plusieurs dents de filetages mâles (6) et femelles (7) issues d'une même hélice de filetage. La définition d'une hélice de filetage figure dans l'ISO 5408. Une dent de filetage mâle (6) comprend un flanc d'engagement mâle (14) et un flanc porteur mâle (12). Une dent de filetage femelle (7) comprend un flanc d'engagement femelle (15) et un flanc porteur femelle (13).

Le joint de la figure 1 est représenté durant son utilisation pendant un effort de traction, par exemple soumis au poids de la colonne en tension à la verticale, dans le sens de la flèche. Dans ce cas d'utilisation normale ce sont les flancs porteurs mâles (12) et femelles (13) qui sont en contact. Les flancs d'engagement mâles (14) et femelles (15) ne sont pas forcément en contact et délimitent un espace qui consiste en un jeu axial de filetage « TAG ». En revanche, les butées et les portées d'étanchéité peuvent être en contact.

Une autre manière de définir le jeu axial de filetage « TAG » est la différence entre la largeur du creux (LCB) entre deux dents de filetage femelle et la largeur de la dent de filetage mâle (LP), tels que visible sur la figure 3.

La figure 2 décrit un joint fileté tubulaire (1) selon l'invention lors d'une utilisation aggravée, par exemple lorsqu'il y a une différence de température qui induit des efforts de compressions au niveau du joint fileté. La connexion aura tendance à se déformer sous l'action desdits efforts de compression. Dans ce cas de figure, ce sont les flancs d'engagement mâles (14) qui sont en contact avec les flancs d'engagement femelles (15). La contrainte sur les portées d'étanchéité mâle (28) et femelle (29) et les butées mâle (24) et femelle (25) qui étaient déjà en contact va augmenter. Il y a une interférence accrue au niveau des portées d'étanchéité mâle (28) et femelle (29) et des butées mâle (24) et femelle (25).

La figure 2 montre qu'on ne peut pas augmenter ou aggraver la compression sur les flancs d'engagement indéfiniment et qu'au-delà d'une certaine limite on peut générer une interférence axiale non désirée et conduisant à une plastification du filetage voire sa détérioration. Ainsi un jeu axial de filetage trop petit à l'état monté sans sollicitations entre les flancs d'engagement mâles (14) et femelle (15) conduit à cette aggravation.

La figure 3 montre un détail du joint fileté tubulaire (1) selon l'invention et en particulier une dent de filetage mâle (6) et femelle (7) à l'état monté. La dent de filetage mâle (6) comprend un flanc porteur mâle (12) et un flanc d'engagement mâle (14). La dent de filetage femelle (7) comprend un flanc porteur femelle (13) et un flanc d'engagement femelle (15). Les deux flancs d'engagements mâle (14) et femelle (15) délimitent un espace dont la dimension axiale est un jeu axial de filetage « TAG ». Ledit jeu axial de filetage TAG est supérieur ou égale à un jeu minimal TAGmin tel que :

[Math 3]

$$TAGmin = IT(min) * (1/2 \frac{(LFpinmin)}{(Dpinmin)} + 1/2 \frac{(LFboxmin)}{(Dboxmin)}) + (4 * Epcoat)$$

Avec :

$$0 \leq Epcoat \leq Epcoat\ max$$

Où:

| | |
|---|---|
| TAGmin | Valeur minimale du jeu axial de filetage en mm |
| ITmin | Valeur minimale de la tolérance du démariage de pas en mm |
| LFpinmin | Valeur minimale de la longueur axiale de filetage mâle en mm |
| LFboxmin | Valeur minimale de la longueur axiale de filetage femelle en mm |
| Dpinmin | Valeur minimale de la distance de la tolérance de pas mâle en mm |
| Dboxmin | Valeur minimale de la distance de la tolérance de pas femelle en mm |
| Epcoat | Valeur de l'épaisseur d'un revêtement anticorrosif et/ou lubrifiant en mm. |

Une autre manière de définir le jeu axial de filetage « TAG » est la différence entre la largeur du creux (LCB) entre deux dents de filetage femelle et la largeur de la dent de filetage mâle (LP), pris à mi-hauteur du filet mâle (6).

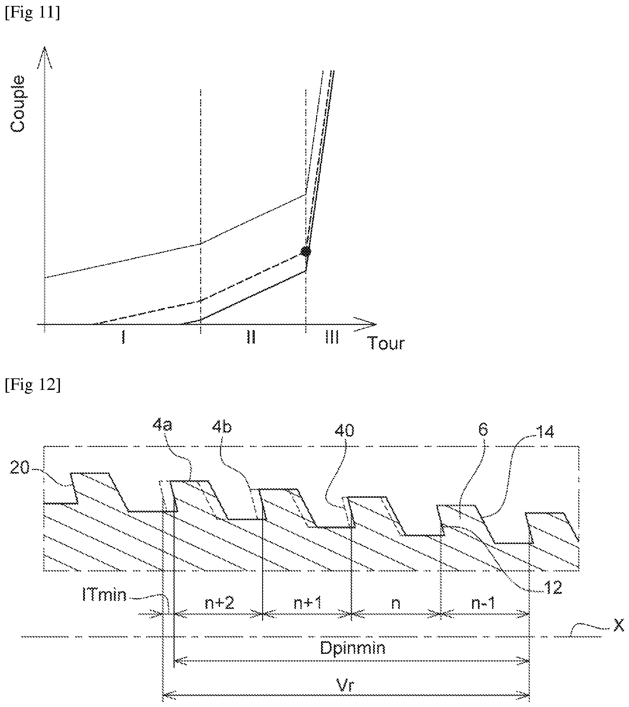

TAGmin correspond à une valeur seuil minimale à partir duquel l'effet de tout décalage du filetage issu d'une accumulation d'erreur de pas est annulé, cette accumulation pouvant également provenir de plusieurs erreurs de pas individuellement acceptables. L'accumulation d'erreurs de pas et l'aggravation qui en résulterait est illustrée sur la figure 12.

Le jeu minimal TAGmin se détermine en fonction de la valeur minimale de la tolérance du démariage de pas ITmin, la valeur minimale de la longueur axiale de filetage mâle LFpinmin, la valeur minimale de la longueur axiale de filetage femelle LFboxmin, la valeur minimale de la distance de la tolérance de pas mâle Dpinmin, et enfin la valeur minimale de la distance de la tolérance de pas femelle Dboxmin.

Le joint fileté peut comprendre un revêtement sur filetage et il faut donc tenir compte du paramètre supplémentaire de l'épaisseur de revêtement Epcoat. Dans le cas de la figure 3 il n'y a pas de revêtement et donc Epcoat est égal à 0.

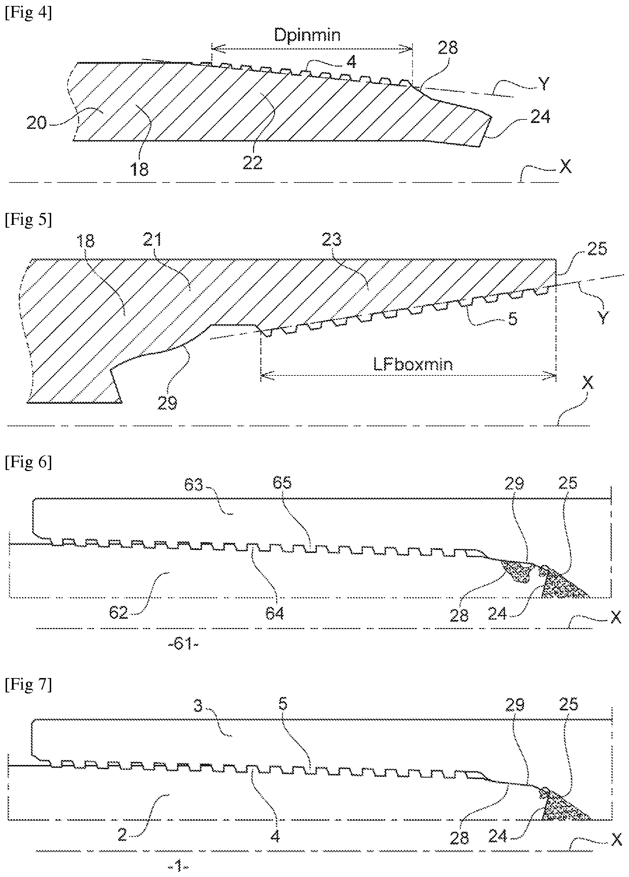

On entend par longueur axiale de filetage mâle LFpinmin ou femelle LFboxmin, la longueur totale du filetage suivant l'axe de filetage du tube. Cette longueur totale du filetage se mesure depuis le fond de filet de la première dent jusqu'au fond de filet de la dernière dent, tel qu'illustré en figures 4 et 5.

On entend par la distance de la tolérance de pas mâle Dpinmin ou femelle Dboxmin, la longueur sur laquelle le pas est contrôlé, c'est-à-dire la longueur totale des filets parfait. Un filet parfait peut se définir par opposition d'un filet imparfait, c'est-à-dire un filet dont la hauteur n'est pas complète. On parle également de filet évanouissant pour un filet imparfait.

On entend par la tolérance d'une erreur de pas les déviations acceptables d'erreur de pas par rapport au plan nominal.

On entend par la tolérance du démariage de pas la différence entre la tolérance d'erreur de pas mâle et la tolérance d'erreur de pas femelle.

On entend par « pas » la distance entre deux flancs porteurs successifs tel que défini par l'ISO 5408.

La valeur de la tolérance du démariage de pas ITmin peut être comprise entre 0,040 et 0,080 mm, de préférence entre 0,048 et 0,072 mm. Ainsi l'erreur de pas est mesurable par un appareil de contrôle classique par exemple décrit dans l'API 5B1. En effet, en dessous de la valeur minimale il faut avoir recours à des appareils plus couteux dont le résultat de mesure n'est pas forcément assuré. Au-dessus de la valeur maximale, la valeur minimale du jeu axial de filetage TAG min est trop importante.

Il est à noter que la valeur TAGmin dépend indirectement de la longueur axiale de filetage.

Pour simplifier l'approche, des valeurs empiriques d'IT min et de TAGmin ont été déterminées et sont données dans le tableau 1 suivant pour des connexions de tubes selon le diamètre externe nominal du tube (OD) :

[Table 1]

| OD (en mm) | Epaisseur du tube (en mm) | TAGmin (en mm) | IT (mm) |
|---|---|---|---|
| 114,30 | 12,7 | 0,126 | 0.052 |
| 139,70 | 12,09 | 0,114 | 0.041 |
| 244,48 | 13,84 | 0,165 | 0.068 |
| 355,60 | 20,62 | 0,231 | 0.065 |

La figure 4 montre une extrémité mâle (20) selon l'invention selon une vue en coupe longitudinale, comprenant une lèvre mâle (22) et un corps métallique (18). Ladite lèvre mâle comprend une portion filetée mâle (4), une surface de butée mâle (24) ainsi qu'une portée d'étanchéité mâle (28). La portion filetée mâle (4) comprend plusieurs dents de filetage mâles (6) qui s'étendent successivement le long d'une ligne de fond de filet Y. L'axe de filetage est parallèle à l'axe X qui s'étend longitudinalement.

La distance de la tolérance de pas mâle ou femelle correspond à la longueur sur laquelle le pas est contrôlé, c'est-à-dire la longueur totale des filets parfait. Un filet parfait peut se définir par opposition à un filet imparfait, c'est-à-dire un filet dont la hauteur n'est pas complète. On parle également de filet évanouissant pour un filet imparfait. Pour une extrémité filetée mâle (20) la distance de la tolérance de pas est défini par Dpinmin.

La figure 5 décrit une extrémité femelle (21) selon l'invention selon une vue en coupe longitudinale comprenant une lèvre femelle (23) et un corps métallique (18). Ladite lèvre femelle comprend une portion filetée femelle (5), une surface de butée femelle (25) ainsi qu'une portée d'étanchéité femelle (29). La portion filetée femelle (5) comprend plusieurs dents de filetage (7) qui s'étendent successivement le long et à partir d'une ligne de fond de filet Y. L'axe de filetage est parallèle à l'axe X qui s'étend longitudinalement.

La figure 6 montre de façon schématique, selon une vue en coupe longitudinale, un joint fileté tubulaire (61) selon l'état de la technique avec représentation de contraintes par une analyse par éléments finis (FEA). Le joint fileté tubulaire (61) comprend un élément tubulaire mâle (62) comprenant une portion filetée mâle (64), une portée d'étanchéité mâle (28) ainsi qu'une butée mâle (24), et un élément tubulaire femelle (63) comprenant une portion filetée femelle (65), une portée d'étanchéité femelle (29) ainsi qu'une butée femelle (25). Dans le cas de la figure 6, le joint comprend un jeu axial de filetage c'est-à-dire un TAG de 0,250 mm pour une connexion avec un diamètre extérieur (OD) de 139,7 mm. En se référant à la table 2 ci-après, un jeu de 0,250mm est supérieur à la valeur de TAGmax indiquée pour une connexion de 139,7mm de diamètre externe nominal.

Les zones sombres de la figure 6 correspondent à des zones de plastifications résultant des compressions mécaniques tel que l'on pourrait en visualiser sur une analyse par éléments finis (FEA). On peut observer sur la figure 6 deux zones distinctes de plastifications, la première étant celle de la portée d'étanchéité mâle (28) et la seconde celle des deux butées mâle (24) et femelle (25). La plastification des butées peut être considérée comme normale et attendue.

La plastification de la portée d'étanchéité mâle (28) en revanche n'est pas acceptable contrairement à celle des butées et constitue un risque majeur de fuite ou de défaillance.

La figure 7 décrit de façon schématique, selon une vue en coupe longitudinale, un joint fileté tubulaire (1) selon l'invention issu d'une analyse par éléments finis. Le joint fileté tubulaire (1) comprend un élément tubulaire mâle (2) comprenant une portion filetée mâle (4), une portée d'étanchéité mâle (28) ainsi qu'une butée mâle (24), et un élément tubulaire femelle (3) comprenant une portion filetée femelle (5), une portée d'étanchéité femelle (29) ainsi qu'une butée femelle (25). Le joint de la figure 7 est différent du joint de la figure 6 au niveau des filetages, agencés de manière à ce que le jeu axial de filetage TAG du joint de la figure 7 est de 0,120 mm, soit inférieur au TAGmax de la connexion. L'analyse par éléments finis (FEA) révèle une absence de plastification de la portée d'étanchéité mâle (28). Dans une configuration selon l'invention, le jeu axial de filetage TAG est suffisamment petit pour que le flanc d'engagement des dents de filetages mâles et femelles soient en contact l'un contre l'autre sans atteindre le stade de la plastification des portées d'étanchéités. Dans ces conditions, le filetage est suffisamment en contact pour ne pas interférer tout en ralentissant ou en compensant les efforts de compressions. L'étanchéité est donc améliorée. Le filetage joue donc un rôle de soutien sans être endommagé et résout le problème de l'aggravation abordé dans la figure 2.

La figure 8 montre un élément tubulaire mâle (2) selon l'invention, ayant un axe longitudinal X, comprenant une lèvre mâle (22), une portion filetée mâle (4) et une butée mâle (24).

Le jeu axial de filetage TAG est défini par rapport à l'aire de la surface de la coupe transversale (A) de la lèvre mâle (22) « PinLipSurface », autrement dit la section transversale de l'élément tubulaire mâle au niveau de la lèvre mâle, entre la portée d'étanchéité et la surface de butée. Le jeu axial de filetage TAG est inférieur ou égal à un jeu maximal TAGmax tel que :

[Math 4]

$$TAGmax = a * PinLipSurface + b + (4 * Epcoat)$$

Avec :

$$0 \le Epcoat \le Epcoat\ max$$

a = 0.00053

b = 0.14

Où :
PinLipSurface Valeur de la surface de la section transversale de la lèvre mâle entre la portée d'étanchéité et la surface de butée en mm$^2$

a   Valeur de la pente de la corrélation
b   Valeur de l'ordonnée à l'origine
Epcoat   Valeur de l'épaisseur d'un revêtement anticorrosif et/ou lubrifiant en mm

On entend par la surface de la coupe transversale (A) de la lèvre mâle (22), la surface délimitée par la butée mâle (24) d'un côté, le profil de la surface extérieure ou du côté du filetage (31), un profil de surface intérieure (32) opposée à la surface extérieure et enfin par délimitée par un segment orienté radialement (34) et passant par un point milieu de la portée d'étanchéité mâle (28).

Le jeu maximal TAGmax se détermine par rapport aux dimensions de l'élément tubulaire mâle (2) ou de son extrémité filetée mâle (20), en prenant en considération que l'élément tubulaire femelle (3) ou son extrémité filetée femelle (21) correspondant est dimensionné de manière à ce que les portées d'étanchéités soient en contact après assemblage de l'extrémité filetée mâle (20) avec l'extrémité filetée femelle (21).

« a » est la valeur de la pente de la corrélation et « b » la valeur de l'ordonnée à l'origine de la droite représentant TAGmax en fonction de PinLipSurface.

A des fins de simplification, la demanderesse a calculé un ensemble de valeurs pratiques selon le diamètre nominal de tube pour les valeurs de TAGmax.

[Table 2]

| OD (en mm) | Epaisseur du tube (en mm) | TAGmax (en mm) | Surface pin lip (mm²) |
|---|---|---|---|
| 114,30 | 12,7 | 0,166 | 100.73704 |
| 139,70 | 12,09 | 0,154 | 94.9086502 |
| 244,48 | 13,84 | 0,255 | 120.720601 |
| 355,60 | 20,62 | 0,271 | 187.84287 |

Comme on peut le voir dans les exemples dans les tableaux 1 et 2, les valeurs de TAGmin et de TAGmax peuvent différer d'une connexion à une autre.

Selon un aspect de l'invention, le jeu axial de filetage TAG est compris entre deux valeurs TAGmin et TAGmax et tels que :

$$TAGmin < TAGmax$$

Grâce à cette caractéristique, pour un même type de connexion ou de dimensionnement, il est possible de déterminer un jeu axial de filetage (TAG) qui respecte un seuil minimal à partir duquel il est assuré de compenser l'effet de tout décalage du filetage issu d'une accumulation d'erreurs de pas, tout en s'affranchissant simultanément de tout risque de perte de performance d'étanchéité causée par l'accumulation d'erreurs de pas.

La figure 9 décrit un mode de réalisation pour lequel l'invention comprend un revêtement solide ou semi-solide. Le revêtement a une fonction lubrifiante et/ou anticorrosion. Ce type de joints avec revêtement est de plus en plus répandu pour éviter l'emploi de graisses de vissage. La figure 9 décrit un joint fileté tubulaire (1) selon l'invention et en particulier une dent de filetage mâle (6) et une dent de filetage femelle (7) à l'état assemblés, dans une vue de coupe selon un axe longitudinal X. La dent de filetage mâle (6) comprend un flanc porteur mâle (12) et un flanc d'engagement mâle (14). La dent de filetage femelle (7) comprend un flanc porteur femelle (13) et un flanc d'engagement femelle (15). Les flancs d'engagements mâle (14) et femelle (15) ainsi que les flancs porteurs mâle (12) et femelle (14) comprennent un revêtement solide anticorrosif et/ou lubrifiant (10). Une manière de définir le jeu axial de filetage « TAG » est la différence entre la largeur du creux (LCB) entre deux dents de filetage femelle et la largeur de la dent de filetage mâle (LP). Ledit jeu axial de filetage TAG est supérieur ou égal à un jeu minimal TAGmin tel que :

[Math 5]

$$TAGmin = IT(min) * (1/2 \frac{(LFpinmin)}{(Dpinmin)} + 1/2 \frac{(LFboxmin)}{(Dboxmin)}) + (4 * Epcoat)$$

Avec :

$$0 < Epcoat \leq Epcoat\ max$$

Où :

| | |
|---|---|
| TAGmin | Valeur minimale du jeu axial de filetage en mm |
| ITmin | Valeur minimale de la tolérance du démariage de pas en mm |
| LFpinmin | Valeur minimale de la longueur axiale de filetage mâle en mm |
| LFboxmin | Valeur minimale de la longueur axiale de filetage femelle en mm |
| Dpinmin | Valeur minimale de la distance de la tolérance de pas mâle en mm |
| Dboxmin | Valeur minimale de la distance de la tolérance de pas femelle en mm |
| Epcoat | Valeur de l'épaisseur d'un revêtement anticorrosif et/ou lubrifiant en mm |

Les développements de la figure 3 sont applicables à la figure 9. Dans cette configuration, l'épaisseur de revêtement Epcoat est multipliée par un facteur 4 qui prend en considération les 4 épaisseurs de revêtement présent sur deux flancs d'engagements mâle (14) et femelle (15) et deux flancs porteurs mâle (12) et femelle (13). Le paramètre 4 * Epcoat dans l'équation contribue à avoir un TAGmin plus grand. Dans ce cas de figure, Epcoat est une moyenne des épaisseurs sur les flancs porteurs mâle (12) et femelle (13) et d'engagement mâle (14) et femelle (15) pris en combinaison, mais l'invention peut aussi prévoir des épaisseurs Epcoat, différentes en fonction des flancs d'engagement ou porteur concernés. L'épaisseur de revêtement Epcoat est une épaisseur moyenne de revêtements sur flancs de filet.

L'épaisseur d'un revêtement solide peut contribuer à augmenter la pression de contact sur les flancs d'un filet augmentant ainsi le risque de fragilisation ou de plastification. L'invention permet un vissage sans risque de fragilisation ou de plastification supplémentaire d'une connexion dû à la présence d'un tel revêtement.

Selon un aspect complémentaire, la valeur maximale de l'épaisseur d'un revêtement (10) anticorrosif et/ou lubrifiant Epcoat max est égale à 0,0075 mm. De préférence le revêtement (10) a une épaisseur comprise entre 0,0010 et 0,0075 mm.

Grâce à cette caractéristique, la configuration peut intégrer une grande variété de revêtements solides anticorrosifs et/ou lubrifiants, qui garantit d'absorber tout risque de démariage de pas jusqu'à une épaisseur maximale de 0,0075 mm.

Le revêtement anticorrosif et/ou lubrifiant (10) peut comprendre une couche comprenant du Zinc et du Nickel qui présente d'excellente propriété anticorrosive et lubrifiante.

Les développements de la figure 9 sont applicables pour l'ensemble ou en partie de la portion filetée mâle (4) et femelle (5), lorsque l'invention comprend un revêtement (10).

La figure 10 montre une courbe de vissage d'un tube selon l'état de l'art comprenant un cumul d'erreur de pas non absorbé. Une méthode utilisée pour s'assurer que les connexions sont assemblées correctement consiste à surveiller le couple appliqué par une pince de serrage par rapport au nombre de tours. On entend par pince de serrage une clé autobloquante de grande capacité utilisée pour saisir les composants mâle et femelle de la connexion et appliquer un couple de serrage/desserage. En connectant un ordinateur à la cellule de charge sur la pince et un compteur de tours électronique, un graphique peut être tracé montrant le couple sur l'axe vertical et le nombre de tour sur l'axe horizontal tel que représenté dans la figure 10,

La première partie « I » correspond à l'étape de serrage où il y a contact entre les filetages, plus particulièrement au moins contact entre flancs d'engagement respectifs d'une extrémité filetée mâle (20) et femelle (21). A ce stade, il y a une faible résistance pendant les premiers tours jusqu'à ce que les filetages respectifs commencent à interférer radialement. La seconde partie « II » correspond à la mise en contact entre les portées d'étanchéités mâles et femelles et qui se traduit par une première forte augmentation de la courbe. Enfin, la dernière partie « III » correspond à la rencontre des surfaces de butées des éléments filetées tubulaires mâles et femelles, ce qui génère une augmentation brusque du couple sur de faibles amplitudes de rotation relative des composants mâle et femelle l'un par rapport à l'autre.

Comme il est impossible d'obtenir un couple identique à chaque vissage de deux éléments filetés tubulaires, une fenêtre d'acceptation existe, représentée par les deux courbes de vissage en trait continu dans la figure 10 et 11. Ainsi une connexion comprenant un cumul d'erreur de pas non absorbé par la configuration, représentée par la courbe en trait discontinu dans la figure 10, provoquera un décalage dans les phases de vissage, visible sur le graphique avec une courbe qui se retrouve hors de la fenêtre d'acceptation. Cependant à ce stade, il est trop tard, le tube peut ne plus être utilisé ou réparé et est donc susceptible d'être rejeté, engendrant ainsi des pertes.

La figure 11 montre une courbe de vissage en traits discontinus pour l'assemblage d'un joint selon l'invention, comprenant un cumul d'erreur de pas absorbé. Le jeu axial de filetage est suffisamment grand pour absorber tout cumul d'erreur de pas. Il y a donc une absence de décalage et par conséquent la courbe est bien comprise dans la fenêtre acceptable représentée par les deux courbes de vissage en trait continu.

La figure 12 montre en superposé une première extrémité filetée mâle (20) et une seconde extrémité filetée mâle (40), comprenant chacune une portion filetée mâle (4a) et (4b). Chaque dent de filetage mâle (6) comprend un flanc porteur mâle (12) et d'engagement (14) La portion (4a) de la première extrémité filetée mâle (20) représentée en trait plein ne comprend pas d'erreur de pas, correspondant à la valeur au plan ou à la valeur théorique de la valeur minimale de la distance de la tolérance de pas mâle en mm Dpinmin. La portion (4b) de la seconde extrémité filetée mâle (40) se différenciant par des traits pointillés, montrant donc un décalage des flancs porteurs, comprend un cumul d'erreur de pas et correspond à la valeur réelle Vr.

Chacune des première (20) et seconde (40) extrémité filetée mâle comprend plusieurs « pas » de filetage correspondant à un niveau de position « n » croissant ou décroissant représenté sur la figure 12 par « n-1 », « n », « n+1 » etc...

On entend par le « pas » la distance entre deux flancs porteurs successifs, mâles ou femelles, tel que défini par l'ISO 5408.

Dans le cadre de la figure 12, les pas sont définis par les flancs porteurs successifs mâles. La valeur théorique Dpinmin correspond à la valeur au plan du total de pas considéré. En comparant la valeur théorique Dpinmin et la valeur réelle Vr il est possible de relever une différence issue du décalage provoqué par le cumul d'erreur de pas. Cette différence correspond à la valeur minimale de la tolérance du démariage de pas ITmin.

Un exemple de réalisation d'une configuration selon l'invention peut être obtenu selon les étapes suivantes :

Usinage d'un élément fileté mâle et d'une extrémité fileté femelle avec un tour à commande numérique. L'usinage se fait sur l'extrémité fileté mâle sur une longueur totale de 96.94 mm. L'erreur de pas est contrôlée sur une longueur Dpinmin = 55.88 mm sur l'extrémité fileté mâle. L'usinage est réalisé à l'aide d'une plaquette d'usinage de forme, cette forme est le négatif du creux de filetage mâle. La largeur de la plaquette est de 2.567 mm et le pas d'usinage 5.08 mm. L'usinage se fait sur l'extrémité fileté femelle sur une longueur de 82.98 mm et l'erreur de pas est contrôlée sur une longueur de 76.20 mm. L'usinage est réalisé avec une plaquette de forme dont la largeur est 2.647mm et un pas d'usinage de 5.08 mm.

Optionnellement l'invention peut comprendre les étapes suivantes :

- sablage de ces éléments filetés au corrindon brun F8;

- application de ZnNi par électro déposition sur les 2 éléments fileté;

- application d'une passivation au Chrome III par immersion sur les 2 éléments fileté;

- application d'un revêtement lubrifiant par pulvérisation pneumatique sur les 2 éléments filetés.


**Revendications**

1. Joint fileté tubulaire (1) pour le forage, l'exploitation des puits hydrocarbures, le transport de pétrole et de gaz, le transport ou le stockage d'hydrogène, la captation carbone ou la géothermie, comprenant un élément tubulaire mâle (2) et un élément tubulaire femelle (3) chacun desdits éléments tubulaires mâle (2) ou femelle (3) comprenant respectivement une portion filetée mâle (4) et une portion filetée femelle (5), l'une ou l'autre des portions filetées mâle (4) ou femelle (5) comprenant optionnellement un revêtement solide anticorrosif et/ou lubrifiant (10), ladite portion filetée mâle (4) et portion filetée femelle (5) comprenant respectivement au moins une dent de filetage mâle (6) et une dent de filetage femelle (5) et un jeu axial de filetage TAG (8) assurant un espace, à l'état monté, entre un flanc d'engagement (14) de ladite dent de filetage mâle et un flanc porteur (15) de ladite dent de filetage femelle (7), **caractérisé en ce que** ledit jeu axial de filetage TAG est supérieur ou égal à un jeu minimal TAGmin tel que :

$$[\text{Math 6}]$$

$$TAGmin = IT(min) * (1/2\frac{(LFpinmin)}{(Dpinmin)} + 1/2\frac{(LFboxmin)}{(Dboxmin)}) + (4 * Epcoat)$$

Avec :

$$0 \leq Epcoat \leq Epcoat\ max$$

Où :

TAGmin Valeur minimale du jeu axial de filetage en mm
ITmin Valeur minimale de la tolérance du démariage de pas en mm
LFpinmin Valeur minimale de la longueur axiale de filetage mâle en mm
LFboxmin Valeur minimale de la longueur axiale de filetage femelle en mm
Dpinmin Valeur minimale de la distance de la tolérance de pas mâle en mm
Dboxmin Valeur minimale de la distance de la tolérance de pas femelle en mm
Epcoat Valeur de l'épaisseur d'un revêtement anticorrosif et/ou lubrifiant en mm
Epcoat max Valeur maximale de l'épaisseur d'un revêtement anticorrosif et/ou lubrifiant

2. Joint fileté tubulaire (1) selon la revendication 1 **caractérisé en ce que** la valeur de la tolérance du démariage de pas est comprise entre 0,040 et 0,080 mm, de préférence entre 0,048 et 0,072 mm.

3. Joint fileté tubulaire (1) selon l'une quelconque des revendications précédentes, **caractérisé en ce que** le jeu axial de filetage TAG est inférieur ou égale à un jeu maximal TAGmax tel que :

[Math 7]

$$TAGmax = a * PinLipSurface + b + (4 * Epcoat)$$

Avec :

$$0 \leq Epcoat \leq Epcoat\ max$$

a = 0.00053
b = 0.14
Où:

PinLipSurface Valeur de la surface de la coupe transversale de la lèvre mâle entre la portée d'étanchéité et la surface de butée en mm$^2$
a Valeur de la pente de la corrélation
b Valeur de l'ordonnée à l'origine

4. Joint fileté tubulaire (1) selon la revendication 3, **caractérisé en ce que** le jeu axial de filetage TAG (8) est compris entre deux valeurs TAGmin et TAGmax tel que : TAGmin < TAGmax

5. Joint fileté tubulaire (1) selon l'une quelconque des revendications précédentes, **caractérisé en ce que** au moins une des portions filetées mâle (4) ou portions filetées femelle (5) comprends un revêtement anticorrosif et/ou lubrifiant et **en ce que** la valeur de l'épaisseur du revêtement anticorrosif et/ou lubrifiant (10) Epcoat est supérieure à zéro.

6. Joint fileté tubulaire (1) selon la revendication 5, **caractérisé en ce que** le revêtement anticorrosif et/ou lubrifiant a une épaisseur d'une valeur maximale Epcoat max égale à 0,0075 mm.

7. Joint fileté tubulaire (1) selon l'une quelconque des revendications précédentes, **caractérisé en ce que** le revêtement anticorrosif et/ou lubrifiant (10) comprends une couche comprenant du Zinc et du Nickel.

**Patentansprüche**

1. Rohrförmige Gewindeverbindung (1) für die Bohrung und den Betrieb von Kohlenwasserstoffbohrlöchern, den Transport von Öl und Gas, den Transport oder die Lagerung von Wasserstoff, Kohlenstoffabscheidung oder Geothermie, umfassend ein männliches rohrförmiges Element (2) und ein weibliches rohrförmiges Element (3), wobei das männliche (2) und das weibliche Element (3) einen männlichen Gewindeabschnitt (4) bzw. einen weiblichen Gewindeabschnitt (5) umfassen, wobei der eine oder der andere des männlichen (4) oder weiblichen Gewindeabschnitts (5) optional eine feste korrosionshemmende und/oder schmierende Beschichtung (10) umfasst, wobei der männliche Gewindeabschnitt (4) und der weibliche Gewindeabschnitt (5) mindestens einen männlichen (6) bzw. einen weiblichen Gewindezahn (5) und ein axiales Gewindespiel TAG (8) umfassen, das im montierten Zustand einen Abstand zwischen einer Eingriffsflanke (14) des männlichen Gewindezahns und einer Tragflanke (15) des weiblichen (7) Gewindezahn gewährleistet, **dadurch gekennzeichnet, dass** das axiale Gewindespiel TAG größer als oder so groß wie ein Mindestspiel TAGmin ist, so dass:

[Math 6]

$$TAGmin = IT(min) * \frac{1}{2}\left(\frac{LFpinmin}{Dpinmin}\right) + \frac{1}{2}\left(\frac{LFboxmin}{Dboxmin}\right) + (4 * Epcoat)$$

mit:

$$0 \leq Epcoat \leq Epcoat\ max$$

wobei:

TAGmin Mindestwert des axialen Gewindespiels in mm ITmin Mindesttoleranzwert der Steigungsabweichung in mm

LFpinmin Mindestwert der axialen Länge des männlichen Gewindes in mm

LFboxmin Mindestwert der axialen Länge des weiblichen Gewindes in mm

Dpinmin Mindestwert des Abstands der männlichen Steigungstoleranz in mm

Dboxmin Mindestwert des Abstands der weiblichen Steigungstoleranz in mm

Epcoat Wert der Dicke einer korrosionshemmenden und/oder schmierenden Beschichtung in mm Epcoat max Maximalwert der Dicke einer korrosionshemmenden und/oder schmierenden Beschichtung.

2. Rohrförmige Gewindeverbindung (1) nach Anspruch 1, **dadurch gekennzeichnet, dass** der Toleranzwert der Steigungsabweichung zwischen 0,040 und 0,080 mm, vorzugsweise zwischen 0,048 und 0,072 mm, beträgt.

3. Rohrförmige Gewindeverbindung (1) nach einem der vorangehenden Ansprüche, **dadurch gekennzeichnet, dass** das axiale Gewindespiel TAG kleiner als oder so groß wie ein Maximalspiel TAGmax ist, so dass:

[Math 7]

$$TAGmax = a * PinLipSurface + b + (4 * Epcoat)$$

mit:

$$0 \leq Epcoat \leq Epcoat\ max$$

a = 0,00053
b = 0,14

wobei:
PinLipSurface Wert der Querschnittsfläche der männlichen Lippe zwischen der Dichtfläche und der Anschlagsfläche in mm$^2$

a Wert der Steigung der Korrelation
b Wert der Ordinate am Ursprung.

4. Rohrförmige Gewindeverbindung (1) nach Anspruch 3, **dadurch gekennzeichnet, dass** das axiale Gewindespiel TAG (8) zwischen zwei Werten, TAGmin und TAGmax, liegt, so dass: TAGmin < TAGmax.

5. Rohrförmige Gewindeverbindung (1) nach einem der vorangehenden Ansprüche, **dadurch gekennzeichnet, dass** mindestens einer des männlichen Gewindeabschnitts (4) und des weiblichen Gewindeabschnitts (5) eine korrosionshemmende und/oder schmierende Beschichtung umfasst und dass der Wert der Dicke der korrosionshemmenden und/oder schmierenden Beschichtung (10) Epcoat größer als Null ist.

6. Rohrförmige Gewindeverbindung (1) nach Anspruch 5, **dadurch gekennzeichnet, dass** die korrosionshemmende und/oder schmierende Beschichtung eine Dicke mit einem Maximalwert Epcoat max von 0,0075 mm aufweist.

7. Rohrförmige Gewindeverbindung (1) nach einem der vorangehenden Ansprüche, **dadurch gekennzeichnet, dass** die korrosionshemmende und/oder schmierende Beschichtung (10) eine Zink und Nickel umfassende Schicht umfasst.

**Claims**

1. A tubular threaded joint (1) for the drilling, operation of hydrocarbon wells, transport of oil and gas, transport or storage of hydrogen, carbon capture or geothermal energy, comprising a male tubular element (2) and a female tubular element (3), each of said male (2) or female (3) tubular elements comprising respectively a male threaded portion (4) and a female threaded portion (5), one or the other of the male (4) or female (5) threaded portions optionally comprising an anticorrosive and/or lubricating solid coating (10), said male threaded portion (4) and female threaded portion (5) comprising respectively at least one male threading tooth (6) and one female threading tooth (5) and a threaded axial gap TAG (8) ensuring a space, in the mounted state, between a stab flank (14) of said male threading tooth and a load flank (15) of said female threading tooth (7), **characterised in that** said threaded axial gap TAG is greater than or equal to a minimum gap TAGmin such that:

[Math 6]

$$TAGmin = IT(min) * (1/2 \frac{(LFpinmin)}{(Dpinmin)} + 1/2 \frac{(LFboxmin)}{(Dboxmin)}) + (4 * Epcoat)$$

With:

$$0 \leq Epcoat \leq Epcoat\ max$$

Where:

TAGmin Minimum value of the threaded axial gap in mm
ITmin Minimum value of the pitch mismatch tolerance in mm
LFpinmin Minimum value of the axial male threading length in mm
LFboxmin Minimum value of the axial female threading length in mm
Dpinmin Minimum value of the distance of the male pitch tolerance in mm
Dboxmin Minimum value of the distance of the female pitch tolerance in mm
Epcoat Value of the thickness of an anticorrosive and/or lubricating coating in mm
Epcoat max Maximum value of the thickness of an anticorrosive and/or lubricating coating

2. The tubular threaded joint (1) according to claim 1, **characterised in that** the pitch mismatch tolerance value is comprised between 0.040 and 0.080 mm, preferably between 0.048 and 0.072 mm.

3. The tubular threaded joint (1) according to any one of the preceding claims, **characterised in that** the threaded axial gap TAG is less than or equal to a maximum gap TAGmax such that:

[Math 7]

$$TAGmax = a * PinLipSurface + b + (4 * Epcoat)$$

With:

$$0 \leq Epcoat \leq Epcoat\ max$$

a = 0.00053
b = 0.14

Where:
PinLipSurface Value of the cross-sectional area of the male lip between the sealing surface and the stop surface in mm$^2$

a Value of the slope of the correlation
b Value of the intercept

4. The tubular threaded joint (1) according to claim 3, **characterised in that** the threaded axial gap TAG (8) is comprised between two values TAGmin and TAGmax such that: TAGmin < TAGmax

5. The tubular threaded joint (1) according to any one of the preceding claims, **characterised in that** at least one of the male threaded portions (4) or female threaded portions (5) comprises an anticorrosive and/or lubricating coating and **in that** the value of the thickness of the anticorrosive and/or lubricating coating (10) Epcoat is greater than zero.

6. The tubular threaded joint (1) according to claim 5, **characterised in that** the anticorrosive and/or lubricating coating has a thickness with a maximum value Epcoat max equal to 0.0075 mm.

7. The tubular threaded joint (1) according to any one of the preceding claims, **characterised in that** the anticorrosive and/or lubricating coating (10) comprises a layer comprising Zinc and Nickel.

[Fig 1]

[Fig 2]

[Fig 3]

[Fig 4]

[Fig 5]

[Fig 6]

[Fig 7]

[Fig 8]

[Fig 9]

[Fig 10]

[Fig 11]

[Fig 12]

## RÉFÉRENCES CITÉES DANS LA DESCRIPTION

**Documents brevets cités dans la description**

- FR 2952993 A1